# EUROPÄISCHE PATENTSCHRIFT

(11) **EP 3 763 559 B1**
(45) Veröffentlichungstag und Bekanntmachung des Hinweises auf die Patenterteilung: **04.10.2023**
(21) Anmeldenummer: 20179620.8
(22) Anmeldetag: 12.06.2020
(51) Int. Cl.: B60M 1/30

(54) **STROMSCHIENENSYSTEM**
BUSBAR SYSTEM
SYSTÈME DE RAIL CONDUCTEUR

(30) Priorität: 11.07.2019 DE 202019103824 U
(43) Veröffentlichungstag der Anmeldung: 13.01.2021
(73) Patentinhaber: REHAU Industries SE & Co. KG, 95111 Rehau (DE)
(72) Erfinder: Deistler, Thomas, 95158 Kirchenlamitz (DE); Lautenschläger, Heike, 95706 Schirnding (DE); Meinel, Udo, 95111 Rehau (DE)

(56) Entgegenhaltungen:
- DE-U1- 8 806 387
- DE-U1-202012 102 995
- DE-U1-202017 101 187

## Beschreibung

Die Erfindung betrifft ein Stromschienensystem umfassend wenigstens eine Stromschiene, wenigstens ein Befestigungssystem mit einer ersten Befestigungsvorrichtung sowie einer zweiten Befestigungsvorrichtung, wenigstens einer Trägervorrichtung, wobei das Befestigungssystem an der Trägervorrichtung, wenigstens eine Stromschiene aufnehmend, fixierbar ist, wobei die Befestigungsvorrichtung des Befestigungssystems aus einem elektrisch isolierendem Material hergestellt ist, wobei die erste Befestigungsvorrichtung eine Basis mit zwei daran, einander gegenüberliegend, angeordneten Abdeckelementen aufweist, die die Trägervorrichtung zumindest teilweise abdeckend umgreifen.

Stromschienen haben sich seit Jahren im Stand der Technik etabliert und bewährt.

Ein gattungsgemäßes Stromschienensystem wird in der DE 1615545 A1 beschrieben. Dieses Stromschienensystem weist einen Stromschienenträger auf, bestehend aus einem Stromschienenbock, an dem die Stromschiene mittels einer an einem tragenden Isolator angebrachten Klaue befestigt ist. Dieses Stromschienensystem soll so ausgebildet sein, dass sogenannte Erdschlüsse bzw. Kurzschlüsse vermieden werden sollen, um schwerwiegende Betriebsstörungen des Stromschienensystems vermeiden zu können.

Weiterhin soll eine größere Betriebssicherheit durch geeignete Ausbildung des Isolators erreicht werden. Dazu ist der tragende Isolator ein glasfaserverstärkter Kunststoffstab, dessen ein Ende mit dem Stromschienenbock verbunden und an dessen anderem Ende die Klaue angebracht ist. Nachteilig bei diesem Stromschienensystem ist, dass dieses aus verschiedenen Teilstücken gebildet ist, die wiederum aus unterschiedlichen Werkstoffen wie Metallen bzw. glasfaserverstärktem Kunststoff hergestellt sind. Dies erhöht sowohl den Herstellungs- als auch den Logistikaufwand derartig hergestellter Stromschienensysteme. Weiterhin nachteilig ist, dass die verwendeten Befestigungssysteme sowie die tragenden metallischen Teile geeignet sind, die Bildung von sogenannten Kriechströmen zu begünstigen.

Ebenfalls nachteilig bei diesem Stromschienensystem wird der nicht unerhebliche Aufwand bei der Montage sowie der Befestigung bzw. Justierung der Stromschiene gesehen.

In der DE 8806387 U1 ist ein weiteres Stromschienensystem beschrieben. Dieses Stromschienensystem umfasst einen Installationsträger aus glasfaserverstärktem Polyesterharz mit einem Fußteil und einem daran festgelegten Tragarm für die Stromschiene, wobei das Fußteil einstückig ausgebildet ist und an seinem freien Ende mit Innenbereichen des Tragarms eine Halteaufnahme für den Haltebereich der Stromschiene bildet.

Bei diesem Stromschienensystem soll der Isolationsträger so ausgebildet sein, dass die Befestigungsklammer für die Stromschiene ohne metallische Befestigungselemente im Aufnahmebereich des Tragarms festgelegt ist. Dies soll dadurch realisiert werden, dass der Tragarm zweistückig aus einem fußteilseitigem Formstück und einem Kopfbereich besteht und dass das Formstück mit dem freien Ende des Fußteils unlösbar verbunden ist, während der Kopfbereich über eine Gleitpassung mit dem Formstück verbunden und über ein eine Presspassung bewirkendes Klemmelement an diesem lösbar festgelegt ist.

Dieses Stromschienensystem hat sich erfolgreich bewährt, da es einfach montierbar und kostengünstig herstellbar ist.

Einschränkend bei diesem Stromschienensystem wird gesehen, dass dieses nur für eine definierte Einbausituation einer Stromschiene verwendbar ist, so dass eine Veränderung bspw. der vertikalen Position der Stromschiene nur über zusätzliche Isolationsträger realisierbar ist.

Die DE 20 2017 101187 U1 offenbart ein Stromschienensystem umfassend wenigstens eine Stromschiene, wenigstens ein Befestigungssystem mit einer ersten Befestigungsvorrichtung sowie einer zweiten Befestigungsvorrichtung, wenigstens einer Trägervorrichtung, wobei das Befestigungssystem an der Trägervorrichtung, wenigstens eine Stromschiene aufnehmend, fixierbar ist, dass die Befestigungsvorrichtung des Befestigungssystems aus einem nicht elektrisch leitfähigen Material hergestellt ist, das die erste Befestigungsvorrichtung eine Basis mit zwei daran, einander gegenüberliegend, angeordneten Halteelementen aufweist, die die Trägervorrichtung vollflächig haltend umgreifen, dass die erste Befestigungsvorrichtung wenigstens ein, über eine Aufnahmenut von der Basis beabstandet angeordnetes, die Stromschiene wenigstens teilweise abstützendes, Auflageelement aufweist und dass die erste Befestigungsvorrichtung eine Höhe aufweist, die etwa der doppelten Breite der Stromschiene entspricht.

Hier setzt die Erfindung ein, die sich die Aufgabe gestellt hat, ein Stromschienensystem aufzuzeigen, welches wirtschaftlich und kostengünstig herstellbar ist, welches eine hohe Funktions- bzw. Lebensdauer aufweist, welches eine einfache, baustellengerechte sowie kompakte Bauweise aufweist und welches bei bestimmungsgemäßer Verwendung einfach sowie verdrehsicher montierbar, mechanisch stabil ist, sowie den elektrischen Anforderungen insbesondere an Kriechstrecken vollumfänglich entspricht.

Erfindungsgemäß wird die Aufgabe durch die Merkmale des Anspruches 1 gelöst. Weitere vorteilhafte Ausgestaltungen des erfindungsgemäßen Stromschienensystems sind in den Unteransprüchen beschrieben.

Es hat sich überraschend herausgestellt, dass ein Stromschienensystem umfassend wenigstens eine Stromschiene, wenigstens ein Befestigungssystem mit einer ersten Befestigungsvorrichtung sowie einer zweiten Befestigungsvorrichtung, wenigstens einer Trägervorrichtung, wobei das Befestigungssystem an der Trägervorrichtung, wenigstens eine Stromschiene aufnehmend, fixierbar ist, wobei die Befestigungsvorrichtung des Befestigungssystems aus einem elektrisch isolierenden Material hergestellt ist, wobei die erste Befestigungsvorrichtung eine Basis mit zwei daran, einander gegenüberliegend, angeordneten Abdeckelementen aufweist, die die Trägervorrichtung zumindest teilweise abdeckend umgreifen, sich insbesondere dadurch auszeichnet, dass die erste Befestigungsvorrichtung wenigstens ein, von der Basis wegragendes Positionierelement aufweist, dass an dem Positionierelement wenigstens ein Führungselement angeordnet ist, dass die zweite Befestigungsvorrichtung wenigstens einen Aufnahmeraum aufweist, der an wenigstens einer Längsseite von wenigstens einem Führungssteg begrenzt ist, dass der Aufnahmeraum wenigstens eine Aufnahmeöffnung aufweist. In dieser vorteilhaften Ausgestaltung des erfindungsgemäßen Stromschienensystems ist sichergestellt, dass es eine einfache, baustellengerechte sowie kompakte Bauweise aufweist und bei bestimmungsgemäßer Verwendung auch bei sehr kompakten Stromschienen so an der Befestigungsanordnung anordenbar bzw. fixierbar ist, dass durch diese erfindungsgemäße Ausführung in der Endposition sowohl eine Arretierung als auch ein zusätzlicher Schutz gegen ein Zurückschieben erreichbar ist. Bei diesem erfindungsgemäßen Stromschienensystem ist es somit überraschend erstmals möglich, dass das, die Stromschiene positionierende und fixierende zweite Befestigungselement nicht direkt von vorn anbringbar ist, sondern dass dieses seitlich hinter der Stromschiene eingeführt und diese fixierend übergreifend, befestigbar ist.

Bedingt durch die sehr kompakte und somit kostengünstige Bauform des erfindungsgemäßen Stromschienensystems ist hier insbesondere eine montagesichere und baustellengerechte Endmontage der einzelnen Komponenten problemlos realisierbar.

Weiterhin sind durch diese vorteilhafte Ausgestaltung insbesondere die elektrischen Anforderungen bspw. an Kriechstrecken bzw. Luftstrecken vollumfänglich realisierbar, insbesondere durch die Geometrie bzw. die Anordnung der Abdeckelemente der ersten Befestigungsvorrichtung sowie den Steg der zweiten Befestigungsvorrichtung.

Unter Luftstrecken ist zu verstehen, die kürzeste Entfernung in Luft zwischen zwei leitenden Teilen. Unter Kriechstrecke ist gemeint, die kürzeste Entfernung entlang der Oberfläche eines Isolierstoffs zwischen zwei leitenden Teilen.

Die leitenden Teile des erfindungsgemäßen Stromschienensystems sind einerseits die Stromschiene, die verschiedenen Fixierelemente, sowie die Trägervorrichtung, sofern sie aus einem elektrisch leitfähigen Material besteht. Ein weiterer Vorteil des erfindungsgemäßen Stromschienensystems in der beschriebenen Ausführungsform besteht darin, dass dies äußerst wirtschaftlich und kostengünstig herstellbar ist.

Das erfindungsgemäße Stromschienensystem zeichnet sich weiterhin dadurch aus, dass das Befestigungssystem so ausgebildet ist, dass die erste Befestigungsvorrichtung mit ihrem Positionierelement in Wirkverbindung mit der Aufnahmeöffnung der zweiten Befestigungsvorrichtung steht. Durch diese vorteilhafte Ausgestaltung ist einerseits gewährleistet, dass die stromführende Stromschiene sicher fixiert und eben auch von den anderen elektrisch leitenden Teilen ausreichend beabstandet angeordnet ist.

Es hat sich weiterhin als vorteilhaft herausgestellt, dass das Positionierelement und/oder die Aufnahmeöffnung im Querschnitt etwa rund ausgebildet ist. Dies führt einerseits zu einer kostengünstigen Herstellung und andererseits zu einer leichten, verdrehsicheren Montage des erfindungsgemäßen Stromschienensystems.

Erfindungsgemäß weist die erste Befestigungsvorrichtung wenigstens ein, als Steg ausgebildetes, erstes Führungselement und/oder ein, als Nut ausgebildetes, zweites Führungselement auf. In dem erfindungsgemäßen Stromschienensystems ist neben einer einfachen und exakten Positionierung der Befestigungsvorrichtungen am Befestigungssystem hierdurch weiter eine exakte Führung bei der Montage der Befestigungsvorrichtungen realisierbar.

Ein Vorteil des erfindungsgemäßen Stromschienensystems besteht darin, dass die zweite Befestigungsvorrichtung wenigstens einen Führungssteg aufweist. Dies führt ebenfalls zu einer besseren Positionierung bzw. Fixierung der Befestigungsvorrichtung im Befestigungssystem des erfindungsgemäßen Stromschienensystems.

Ein weiterer Vorteil des erfindungsgemäßen Stromschienensystems besteht darin, dass ein erster Führungssteg in etwa parallel zu einem zweiten Führungssteg der zweiten Befestigungsvorrichtung angeordnet ist. Neben der kostengünstigen Herstellung der Befestigungsvorrichtung des erfindungsgemäßen Stromschienensystems ist hier ebenfalls eine einfache und verdrehsichere Montage auf der Baustelle realisierbar.

Eine weitere vorteilhafte Ausgestaltung des erfindungsgemäßen Stromschienensystems ist so ausgebildet, dass der Führungssteg den Aufnahmeraum der zweiten Befestigungsvorrichtung zumindest teilweise umschließt. Dies führt vorteilhafterweise dazu, dass eine einfache, verdrehsichere Montage der einzelnen Befestigungsvorrichtungen des erfindungsgemäßen Stromschienensystems praktiziert bar ist.

Ebenfalls vorteilhaft bei dem erfindungsgemäßen Stromschienensystem ist, dass das erste Führungselement in etwa parallel zum zweiten Führungselement der ersten Befestigungsvorrichtung angeordnet ist. Hierdurch wird in Verbindung mit der zweiten Befestigungsvorrichtung eine einfache Positionierung bzw. Fixierung des Befestigungssystems der erfindungsgemäßen Stromschienensystems möglich.

Die erste Befestigungsvorrichtung ist dabei vorteilhafterweise weiter so ausgebildet, dass die zweite Befestigungsvorrichtung über Sicherungselemente mit der ersten Befestigungsvorrichtung an der Trägervorrichtung fixierbar ist. Durch diese vorteilhafte Ausgestaltung des erfindungsgemäßen Stromschienensystems ist eine einfache und kostengünstige Fixierung der Stromschiene des erfindungsgemäßen Stromschienensystems realisierbar.

Das erfindungsgemäße Stromschienensystem ist vorteilhafterweise so ausgebildet, dass das Befestigungssystem so ausgebildet ist, dass das Positionierelement der ersten Befestigungsvorrichtung im montierten Zustand von dem Sicherungselement der zweiten Befestigungsvorrichtung beabstandet angeordnet ist. In dieser vorteilhaften Ausgestaltung des erfindungsgemäßen Stromschienensystems können einerseits die sogenannten Kriechstrecken optimiert und andererseits ist eine optimale und dauerhafte Fixierung der Stromschiene erreichbar.

Ein weiterer Vorteil des erfindungsgemäßen Stromschienensystems besteht darin, dass die Länge des Führungselementes der ersten Befestigungsvorrichtung in etwa der Länge des Führungssteges ist der zweiten Befestigungsvorrichtung entspricht. Mit dieser vorteilhaften Ausgestaltung des erfindungsgemäßen Stromschienensystems ist eine exakte Positionierung sowie Fixierung der Stromschiene im Befestigungssystem, verdrehsicher sowie baustellengerecht realisierbar.

In einer ebenfalls vorteilhaften Ausgestaltung des erfindungsgemäßen Stromschienensystems ist das Positionierelement der ersten Befestigungsvorrichtung als Zentrierkonus ausgebildet. Diese vorteilhafte Ausgestaltung des erfindungsgemäßen Stromschienensystems ermöglicht eine exakte und genaue Positionierung der ersten Befestigungsvorrichtung an der zweiten Befestigungsvorrichtung des Befestigungssystems, sowie eine normgerechte und schonende Fixierung über geeignete Sicherungselemente.

Das erfindungsgemäße Stromschienensystem ist weiterhin so ausgebildet, dass das Positionierelement der ersten Befestigungsvorrichtung wenigstens eine Öffnung aufweist. Hierdurch ist eine kostengünstige Herstellung der zweiten Befestigungsvorrichtung des erfindungsgemäßen Stromschienensystems umsetzbar.

In einer ebenfalls vorteilhaften Ausgestaltung des erfindungsgemäßen Stromschienensystems ist die Tiefe des, als Nut ausgebildeten, zweiten Führungselementes der ersten Befestigungsvorrichtung in etwa gleich der Höhe des ersten Führungsteges der zweiten Befestigungsvorrichtung. Dies führt vorteilhaft dazu, dass die zweite Befestigungsvorrichtung bei ihrer Montage an der ersten Befestigungsvorrichtung einerseits seitlich positionierbar und andererseits auch in ihre Fixierposition, im später montierten Zustand, überführbar ist.

Erfindungsgemäß ist das Führungselement etwa horizontal an wenigstens einer Seite des Positionierelementes der ersten Befestigungsvorrichtung angeordnet ist. Hierdurch ist bei dem erfindungsgemäßen Stromschienensystem eine exakte Positionierung und Fixierung der Befestigungsvorrichtungen einfach und baustellengerecht möglich.

Es hat sich weiterhin als vorteilhaft bei dem erfindungsgemäßen Stromschienensystem herausgestellt, dass die Höhe des, von der Basis wegragenden, Positionierelementes größer ist, als die Höhe des Führungselementes der ersten Befestigungsvorrichtung. Mit dieser vorteilhaften Ausgestaltung des erfindungsgemäßen Stromschienensystems ist sowohl eine einfache und exakte Positionierung der Befestigungsvorrichtungen als auch deren Fixierung im Befestigungssystem realisierbar.

Das erfindungsgemäße Stromschienensystem ist weiterhin so ausgebildet, dass die zweite Befestigungsvorrichtung wenigstens einen, von seiner Oberseite wegweisenden, die Stromschiene wenigstens teilweise überdeckenden, Steg aufweist. Durch diese vorteilhafte Ausgestaltung des erfindungsgemäßen Stromschienensystems kann verhindert werden, dass die Luft- und Kriechstrecke zwischen der Stromschiene sowie der über das Befestigungssystem beabstandet angeordneten Trägervorrichtung entsprechend ausreichend lang dimensionierbar ist. Der Steg der zweiten Befestigungsvorrichtung weist dabei von der Oberseite eine Höhe von etwa 10 bis 100 mm, vorzugsweise 10 bis 50 mm auf.

Weiterhin vorteilhaft beim erfindungsgemäßen Stromschienensystem ist, dass die Befestigungsvorrichtung aus einem ungesättigten Polyesterharz mit einer Wärmeformbeständigkeit von wenigstens 200 °C nach EN ISO 75-2 hergestellt ist. Hierdurch ist bei bestimmungsgemäßem Einsatz des erfindungsgemäßen Stromschienensystems gesichert, dass die Befestigungsvorrichtung nicht durch thermische Beanspruchung einer erwärmten Stromschiene geschädigt ist.

Ebenso vorteilhaft beim erfindungsgemäßen Stromschienensystem ist, dass die Befestigungsvorrichtung aus einem ungesättigten Polyesterharz mit einer Kriechwegbildung von etwa CTI 600 gemäß IEC 60112 hergestellt ist. Durch diese vorteilhaften CTI- Werte weist das erfindungsgemäße Stromschienensystem sowie insbesondere die Befestigungsvorrichtung überraschend eine sehr niedrige Kriechwegbildung gemäß IEC 60112 auf.

Ebenfalls vorteilhaft beim erfindungsgemäßen Stromschienensystem ist, dass das Material der Befestigungsvorrichtung eine Durchschlagsspannung von wenigstens 30 kV sowie eine Durchschlagsfestigkeit von wenigstens 10 kV / mm nach IEC 60243 aufweist. Hierdurch können erfindungsgemäße Stromschienensysteme zur Verfügung gestellt werden, die alle elektrischen Anforderungen insbesondere an die elektrische Isolation vollumfänglich realisieren.

Es hat sich weiterhin als vorteilhaft herausgestellt bei dem erfindungsgemäßen Stromschienensystem, dass das Material der Befestigungsvorrichtung wenigstens 30 % Glasfasern gemäß EN ISO 1172 aufweist. Hierdurch können erfindungsgemäße Stromschienensysteme zur Verfügung gestellt werden, bei denen das Befestigungssystem einen Zug-E-Modul von wenigstens 13 GPa sowie eine Zugfestigkeit von wenigstens 100 MPa gemäß EN ISO 527-4 aufweisen.

Ein weiterer Vorteil des erfindungsgemäßen Stromschienensystems besteht darin, dass die Befestigungsvorrichtungen des Befestigungssystems eine Biegefestigkeit von wenigstens 180 MPa sowie einen Biege-E-Modul von wenigstens 10 GPa gemäß EN ISO 14125 aufweisen.

Ebenfalls vorteilhaft beim erfindungsgemäßen Stromschienensystem ist, dass das Material der Befestigungsvorrichtung des Befestigungssystems einen spezifischen Durchgangswiderstand von etwa 10¹² Ohm x cm gemäß IEC 60093 sowie einen spezifischen Oberflächenwiderstand von etwa 10¹² Ohm gemäß IEC 60093 aufweist.

Dabei hat es sich weiterhin als vorteilhaft herausgestellt, dass das Trägerelement der Trägervorrichtung wenigstens ein, etwa horizontal angeordnetes, Positionierelement aufweist. Durch diese vorteilhafte Ausgestaltung des erfindungsgemäßen Stromschienensystems ist eine einfache sowie baustellengerechte Montage möglich und es sind toleranzbedingte Höhenunterschiede der zu montierenden Stromschiene über das Positionierelement schnell und problemlos ausgleichbar.

In einer weiteren vorteilhaften Ausgestaltung des erfindungsgemäßen Stromschienensystems ist dieses so ausgebildet, dass das in der Aufnahmenut des ersten Befestigungselements angeordnete Dämpfungselement den Profilfuß der Stromschiene umgreift. Hierdurch ist einerseits das Einsetzen der zu montierenden Stromschiene in die Aufnahmenut des ersten Befestigungselementes sehr einfach möglich und bei bestimmungsgemäßer Verwendung des erfindungsgemäßen Stromschienensystems erfolgt nahezu kein Verschleiß am Profilfuß der Stromschiene.

Das erfindungsgemäße Stromschienensystem zeichnet sich weiterhin dadurch aus, dass die Kriechstrecke zwischen dem in der Öffnung der Aussparung der ersten Befestigungsvorrichtung angeordneten Sicherungselement zur Stromschiene wenigstens 40 mm beträgt. Durch diese vorteilhafte geometrische Ausgestaltung kann ein erfindungsgemäßes Stromschienensystem zur Verfügung gestellt werden, bei dem das Befestigungssystem eine Luftstrecke von wenigstens 60 mm aufweist.

Ein weiterer Vorteil des erfindungsgemäßen Stromschienensystems ist, dass die Kriechstrecke von dem, in der Öffnung der Aussparung der zweiten Befestigungsvorrichtung angeordneten, Sicherungselementes zur Stromschiene wenigstens 80 mm beträgt.

Vorteilhaft beim erfindungsgemäßen Stromschienensystem ist weiterhin, dass die Luftstrecke vom Profilfuß der Stromschiene zu den Abdeckelementen der ersten Befestigungsvorrichtung wenigstens 60 mm beträgt. Durch die konstruktive Dimensionierung insbesondere der ersten Befestigungsvorrichtung sind somit Kriechstrecken von wenigstens 40 mm sowie Luftstrecke von wenigstens 60 mm bei diesem erfindungsgemäßen Stromschienensystem realisierbar.

Das erfindungsgemäße Stromschienensystem ist vorteilhafterweise so ausgebildet, dass das Befestigungssystem so dimensioniert ist, dass es eine Kriechstrecke gemäß EN 50124-1 von wenigstens 60 mm aufweist. Hierdurch kann ein erfindungsgemäßes Stromschienensystem zur Verfügung gestellt werden, das allen elektrischen Anforderungen insbesondere auch an die Kriechstrecken gerecht ist.

Ein weiterer Vorteil des erfindungsgemäßen Stromschienensystems ist, dass das Befestigungssystem so dimensioniert ist, dass es eine Luftstrecke gemäß EN 50124-1 von wenigstens 60 mm aufweist.

Weiterhin ist das erfindungsgemäße Stromschienensystem so ausgebildet, dass im Profilsteg der Stromschiene wenigstens eine, diesen durchdringende, Öffnung angeordnet ist. Vorteilhafterweise können somit erfindungsgemäße Stromschienensysteme zur Verfügung gestellt werden, bei denen die freien Enden einander gegenüberliegender Stromschienen über an sich bekannte Befestigungselementes sowie Fixierelemente miteinander formschlüssig, sowie elektrisch leitend verbindbar sind.

Es hat sich weiterhin als vorteilhaft herausgestellt, dass die den Profilsteg der Stromschiene durchdringenden Öffnungen in bestimmten regelmäßigen bzw. unregelmäßigen Abständen voneinander angeordnet sind.

Ein weiterer Vorteil des erfindungsgemäßen Stromschienensystems besteht darin, dass die Aufnahmenut der ersten Befestigungsvorrichtung eine Tiefe von etwa 5 bis 20 mm, bevorzugt 5 bis 15 mm aufweist. Hierdurch ist es möglich, erfindungsgemäße Stromschienensysteme mit unterschiedlich dimensionierten Stromschienen zur Verfügung zu stellen.

Ebenfalls vorteilhaft beim erfindungsgemäßen Stromschienensystem ist, dass die Aufnahmenut der ersten Befestigungsvorrichtung eine Breite von etwa 4 bis 20 mm, bevorzugt 4 bis 15 mm aufweist.

Weiterhin vorteilhaft beim erfindungsgemäßen Stromschienensystem ist, dass die zweite Befestigungsvorrichtung über wenigstens ein Sicherungselement kraftschlüssig an dem Aufnahmeelement der ersten Befestigungsvorrichtung über ein Fixierelement befestigt ist.

Die Erfindung soll nun mit den folgenden, die Erfindung nicht einschränkenden, Ausführungsbeispielen näher beschrieben werden.

Es zeigen.
- Fig. 1:: perspektivische Darstellung eines erfindungsgemäßen Stromschienensystems;
- Fig. 2:: Schnittansicht eines erfindungsgemäßen Stromschienensystems;
- Fig. 3:: perspektivische Darstellung der ersten Befestigungsvorrichtung des erfindungsgemäßen Stromschienensystems;
- Fig. 4:: perspektivische Darstellung der zweiten Befestigungsvorrichtung des erfindungsgemäßen Stromschienensystems.
- Fig. 5:: weitere perspektivische Darstellung eines erfindungsgemäßen Stromschienensystems;

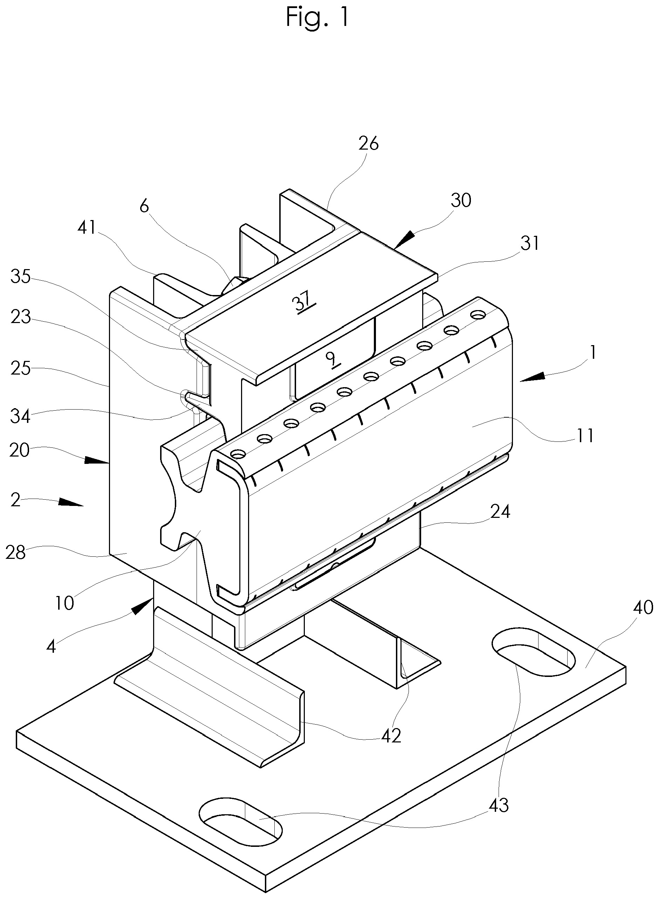

In der Fig. 1 ist eine perspektivische Darstellung eines erfindungsgemäßen Stromschienensystems dargestellt.

Das Stromschienensystem umfasst eine Stromschiene 1, ein Befestigungssystem 2 mit einer ersten Befestigungsvorrichtung 20 sowie einer zweiten Befestigungsvorrichtung 30 und eine Trägervorrichtung 4, wobei das Befestigungssystem 2 an der Trägervorrichtung 4, wenigstens die Stromschiene 1 aufnehmend, fixiert ist.

Die Stromschiene 1 des Stromschienensystems ist so ausgebildet, dass sie ein Basisprofil 10 aufweist, an dem ein Gleitflächenprofil 11 angeordnet ist.

Die erste Befestigungsvorrichtung 20 sowie die zweite Befestigungsvorrichtung 30 des Befestigungssystems 2 sind aus einem elektrisch isolierenden Material hergestellt.

Die erste Befestigungsvorrichtung 20 ist so ausgebildet, dass sie eine Basis 28 mit zwei daran, einander gegenüberliegend, angeordneten Abdeckelementen 25, 26 aufweist, die das Trägerelement 41 der Trägervorrichtung 4 zumindest teilweise abdeckend umgreifen.

Die erste Befestigungsvorrichtung 20 weist an der Unterseite der Basis 28 einen orthogonal, wegragenden Steg 24 auf. Weiterhin weist die erste Befestigungsvorrichtung 20 ein, als Nut ausgebildetes, zweites Führungselement 23 auf.

Die zweite Befestigungsvorrichtung 30 weist einen von ihrer Oberseite 37 wegragenden Steg 31 auf. Weiter weist die zweite Befestigungsvorrichtung 30 eine Aussparung 33 auf, welche durch eine Verschlusselement 9 abgedeckt ist. Die nicht sichtbare Aussparung ist am Steg 31 angeordnet.

Die zweite Befestigungsvorrichtung 30 weist einen ersten Führungssteg 34 sowie einen zweiten Führungssteg 35 auf. Der erste Führungssteg 34 der zweiten Befestigungsvorrichtung 30 steht in Wirkverbindung zu dem als Nut ausgebildeten, zweiten Führungselement 23 der ersten Befestigungsvorrichtung 20.

Die Trägervorrichtung 4 des erfindungsgemäßen Stromschienensystems ist so ausgebildet, dass sie eine Basis 40 aufweist, an der wenigstens ein Trägerelement 41 orthogonal angeordnet ist. Das Trägerelement 41 der Trägervorrichtung 4 ist in diesem Ausführungsbeispiel über Versteifungselemente 42 mit der Basis 40 verbunden.

Die Basis 40 weist weiterhin Öffnungen 43 auf, die für eine Fixierung der Trägervorrichtung 4 vorgesehen sind.

Die erste Befestigungsvorrichtung 20, die zweite Befestigungsvorrichtung 30 sowie das Trägerelement 41 der Trägervorrichtung 4 sind über wenigstens ein Sicherungselement 6, 61 kraftschlüssig fixiert, miteinander verbunden.

Das Abdeckelement 25, 26 der ersten Befestigungsvorrichtung 20 weist in diesem Ausführungsbeispiel eine Höhe auf, die etwa der Breite des Profilfußes 12 der Stromschiene 1 entspricht.

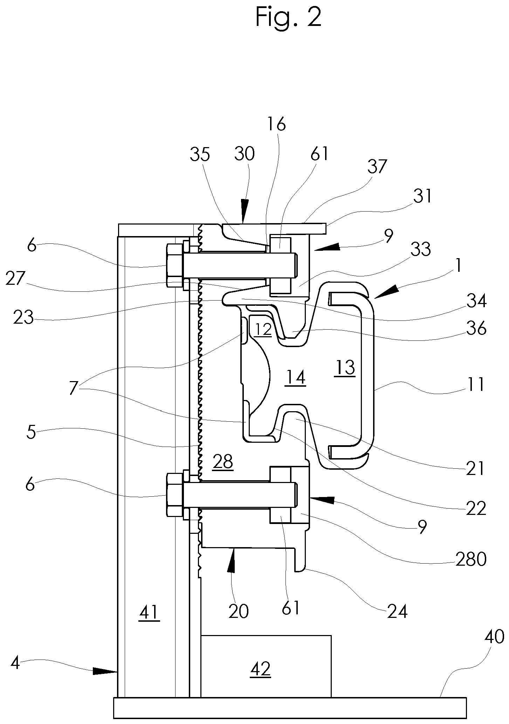

In der Fig. 2 ist die Schnittansicht des erfindungsgemäßen Stromschienensystems als mittiger Längsschnitt dargestellt.

Das Stromschienensystem umfasst eine Stromschiene 1, ein Befestigungssystem 2 mit einer ersten Befestigungsvorrichtung 20 sowie einer zweiten Befestigungsvorrichtung 30, wenigstens einer Trägervorrichtung 4, wobei das Befestigungssystem 2 an der Trägervorrichtung 4, wenigstens die Stromschiene 1 aufnehmend, fixiert ist.

Die Stromschiene 1 weist ein Basisprofil 10 auf, welches einen Profilfuß 12 sowie einen Profilkopf 13 umfasst, die durch den Profilsteg 14 miteinander verbunden sind.

Am Profilkopf 12 des Basisprofils 10 ist ein Gleitflächenprofil 11 angeordnet.

In diesem Ausführungsbeispiel weist die Stromschiene 1 eine Breite von etwa 40 bis 150 mm, bevorzugt 40 bis 120 mm auf.

Das erfindungsgemäße Stromschienensystem weist weiterhin eine Trägervorrichtung 4 auf, welche eine Basis 40 umfasst, sowie wenigstens ein an der Basis 40 angeordnetes Trägerelement 41. Das Trägerelement 41 ist in diesem Ausführungsbeispiel orthogonal an der Basis 40 angeordnet und über wenigstens ein Versteifungselement 42 mit dieser stoffschlüssig verbunden.

Die erste Befestigungsvorrichtung 20 sowie die zweite Befestigungsvorrichtung 30 sind jeweils aus einem elektrisch isolierenden Material hergestellt.

Die erste Befestigungsvorrichtung 20 weist wenigstens ein, von der Basis 28 wegragendes, Positionierelement 27 auf.

Am Positionierelement 27 ist ein Führungselement 23 angeordnet, welches in diesem Ausführungsbeispiel als Nut ausgebildet ist.

Die erste Befestigungsvorrichtung 20 ist so ausgebildet, dass sie ein, über eine Aufnahmenut 22 von der Basis 28 beabstandet angeordnetes, von der Stromschiene 1 wenigstens teilweise beabstandet angeordnetes, Auflageelement 21 aufweist.

Das Auflageelement 21 der ersten Befestigungsvorrichtung 20 ist in diesem Ausführungsbeispiel in etwa orthogonal zur Basis 28 der ersten Befestigungsvorrichtung 20 angeordnet. Weiterhin ist die erste Befestigungsvorrichtung 20 so ausgebildet, dass sie wenigstens ein an der Basis 28, der Aufnahmenut 22 sowie dem Aufnahmeelement 21 angeordnetes Dämpfungselement 7 aufweist.

Die Aufnahmenut 22 der ersten Befestigungsvorrichtung 20 weist in diesem Ausführungsbeispiel eine Tiefe von etwa 10 bis 80 mm, bevorzugt 10 bis 50 mm auf.

Die Breite der Aufnahmenut 22 der ersten Befestigungsvorrichtung 20 beträgt etwa 10 bis 60 mm, bevorzugt 10 bis 40 mm.

Die zweite Befestigungsvorrichtung 30 weist wenigstens einen Aufnahmeraum 8 auf, der an wenigstens einer Längsseite von wenigstens einem Führungssteg 34,35 begrenzt ist.

Weiterhin weist die zweite Befestigungsvorrichtung 30 eine Aussparung 33 auf, die in diesem Ausführungsbeispiel am Steg 31 angeordnet ist.

Die Aussparung 33 ist durch ein Verschlusselement 9 abgedeckt.

In der Aussparung 33 der zweiten Befestigungsvorrichtung 30 ist in diesem Ausführungsbeispiel wenigstens ein Sicherungselement 6,61 angeordnet.

Die zweite Befestigungsvorrichtung 30 ist weiterhin so ausgebildet, dass sie einen von der Oberseite 37 wegweisenden Steg 31 aufweist. In diesem Ausführungsbeispiel weist die zweite Befestigungsvorrichtung 30 einen von der Oberseite 37 wegweisenden, die Stromschiene 1 wenigstens teilweise überdeckenden Steg 31 auf.

Die zweite Befestigungsvorrichtung 30 ist weiterhin so ausgebildet, dass an ihren, dem Steg 31 gegenüberliegenden, freien Ende ein Klemmelement 36 aufweist. An dem Klemmelement 36 ist wiederum wenigstens ein Dämpfungselement 7 angeordnet, welches den Profilfuß 12 der Stromschiene 1 wenigstens teilweise umgreift.

Das Befestigungssystem 2 ist so ausgebildet, dass die erste Befestigungsvorrichtung 20 mit ihrem Positionierelement 27 in Wirkverbindung mit der Aufnahmeöffnung 32 der zweiten Befestigungsvorrichtung 30 steht.

Dabei ist die Höhe, des von der Basis 28 der ersten Befestigungsvorrichtung 20, wegragenden Positionierelementes 27 kleiner als die Tiefe der Aufnahmeöffnung 32 der zweiten Befestigungsvorrichtung 30.

in diesem Ausführungsbeispiel ist das Positionierelement 27 der ersten Befestigungsvorrichtung 20 über einen Spalt 16 vom Sicherungselement 61 in der Aussparung 33 der zweiten Befestigungsvorrichtung 30 beabstandet angeordnet.

Die erste Befestigungsvorrichtung 20 und die zweite Befestigungsvorrichtung 30 sind in diesem Ausführungsbeispiel aus einem ungesättigten Polyesterharz hergestellt mit einer Wärmeformbeständigkeit von etwa 200 °C nach EN ISO 75-2.

Weiterhin weist der Werkstoff der ersten Befestigungsvorrichtung 20 und der zweiten Befestigungsvorrichtung 30 eine Kriechwegbildung von etwa CTI 600 gemäß IEC 60112 auf.

Das Stromschienensystem ist vorteilhafterweise so ausgebildet, dass die Kriechstrecke von dem, in der Aussparung 33 der zweiten Befestigungsvorrichtung 30 angeordneten, Sicherungselement 61 zum Profilfuß 12 der Stromschiene 1 etwa 40 mm beträgt.

Weiterhin ist das erfindungsgemäße Stromschienensystem so ausgebildet, dass die Kriechstrecke vom Profilfuß 12 der Stromschiene 1 zu den Abdeckelementen 25, 26 der ersten Befestigungsvorrichtung 20 etwa 60 mm beträgt.

Das Befestigungssystem 2 des erfindungsgemäßen Stromschienensystems umfassend eine erste Befestigungsvorrichtung 20 sowie eine zweite Befestigungsvorrichtung 30 ist so dimensioniert, dass es eine Kriechstrecke gemäß EN 50124-1 von etwa 40 mm aufweist. Weiterhin ist das Befestigungssystem 2 des erfindungsgemäßen Stromschienensystems so dimensioniert, dass es eine Luftstrecke gemäß EN 50124-1 von etwa 60 mm aufweist.

Das erfindungsgemäße Stromschienensystem ist dabei vorteilhafterweise so ausgebildet, dass die Kriechstrecke vom Profilsteg 14 der Stromschiene 1 über das Aufnahmeelement 21 der ersten Befestigungsvorrichtung 20 zum Abdeckelement 25, 26 etwa 61 mm beträgt.

Das erfindungsgemäße Stromschienensystem ist weiterhin so dimensioniert, dass die Kriechstrecke zwischen der Stromschiene 1 über das Klemmelement 36 sowie den Steg 31 der zweiten Befestigungsvorrichtung 30 zum Abdeckelement 25, 26 der ersten Befestigungsvorrichtung 20 etwa 61 mm beträgt.

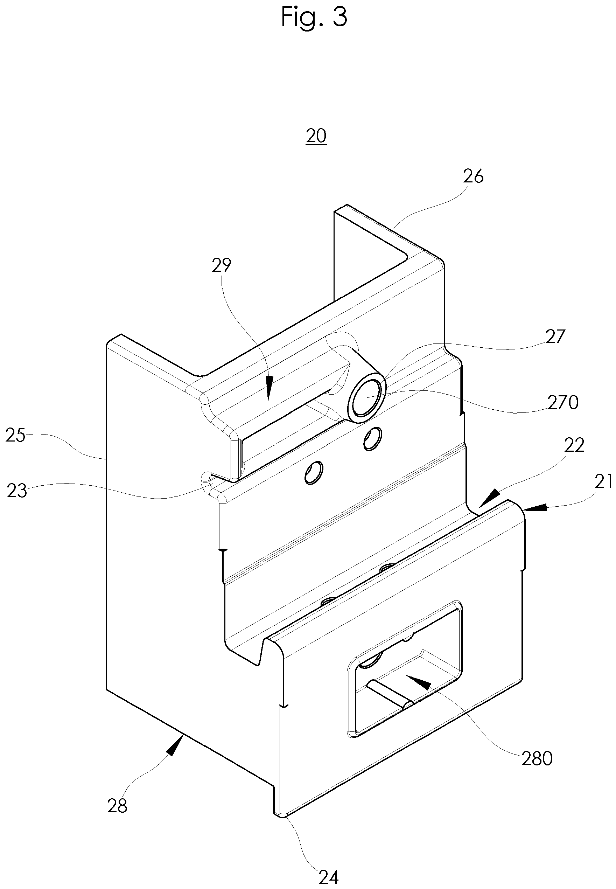

In der Fig. 3 ist eine perspektivische Darstellung der ersten Befestigungsvorrichtung 20 des Befestigungssystems 2 des erfindungsgemäßen Stromschienensystems dargestellt.

Die erste Befestigungsvorrichtung 20 weist eine Basis 28 mit zwei daran, einander gegenüberliegend, angeordneten Abdeckelementen 25, 26 auf, die bei bestimmungsgemäßer Verwendung, die nicht dargestellte Trägervorrichtung zumindest teilweise abdeckend umgreifen.

Die erste Befestigungsvorrichtung 20 weist wenigstens ein, als Steg ausgebildetes, erstes Führungselement 29 und/oder ein, als Nut ausgebildetes, zweites Führungselement 23 auf.

Weiterhin ist die erste Befestigungsvorrichtung 20 so ausgebildet, dass das von der Basis 28 wegragendes Positionierelement 27 im Querschnitt etwa kreisförmig ausgebildet ist. Das Positionierelement 27 der ersten Befestigungsvorrichtung weist eine Öffnung 270 auf. Das Positionierelement 27 ist in diesem Ausführungsbeispiel als Zentrierungskonus ausgebildet.

In diesem Ausführungsbeispiel ist am ersten Abdeckelement 25 ein erstes Führungselement 29 sowie dazu beabstandet, ein zweites Führungselement 23 ausgebildet.

An dem, dem ersten Abdeckelement 25 gegenüberliegenden, freien Ende des Führungselementes 23,29 ist das Positionierelement 27 angeordnet.

Das erste Führungselement 29 ist in diesem Ausführungsbeispiel als Steg ausgebildet. Das zweite Führungselement 23 ist als Nut ausgebildet.

Das erste Führungselement 29 ist in diesem Ausführungsbeispiel etwa parallel zum zweiten Führungselement 23 an der ersten Befestigungsvorrichtung 20 angeordnet.

Das von der Basis 28 wegragende Positionierelement 27 weist eine Höhe auf, die größer ist, als die Höhe des Führungselementes 23,29 der ersten Befestigungsvorrichtung 20.

Bei bestimmungsgemäßem Verwendung des erfindungsgemäßen Stromschienensystems ist das Befestigungssystem 2 so ausgebildet, dass die erste Befestigungsvorrichtung 20 mit ihrem Positionierelement 27 in Wirkverbindung mit der Aufnahmeöffnung 32 der zweiten Befestigungsvorrichtung 30 steht.

Die Höhe des von der Basis 28 der ersten Befestigungsvorrichtung 20 wegragenden Positionierelementes 27 ist dabei kleiner, als die Tiefe der Aufnahmeöffnung 32 der zweiten Befestigungsvorrichtung 30.

Die zweite Befestigungsvorrichtung 30 ist dabei über Sicherungselemente 6,61 mit der ersten Befestigungsvorrichtung 20 an der Trägervorrichtung 4 fixiert.

Im montierten Zustand ist dabei das Befestigungssystem 2 so ausgebildet, dass das Positionierelement 27 der ersten Befestigungsvorrichtung 20 von dem Sicherungselement 61 der zweiten Befestigungsvorrichtung 30 über einen Spalt 16 beabstandet angeordnet ist.

Die Länge des Führungselementes 23,29 der ersten Befestigungsvorrichtung 20 entspricht in etwa der Länge des Führungssteges 34,35 der zweiten Befestigungsvorrichtung 30. Weiterhin ist die Tiefe des, als Nut ausgebildeten, zweiten Führungselementes 23 der ersten Befestigungsvorrichtung 20 in etwa gleich zur Höhe des ersten Führungssteges 34 der zweiten Befestigungsvorrichtung 30.

Die erste Befestigungsvorrichtung 20 ist ebenfalls so ausgebildet, dass sie an ihrer, dem Positionierelement 27 gegenüberliegenden, freien Ende einen Steg 24 aufweist.

Weiterhin ist die Basis 28 der ersten Befestigungsvorrichtung 20 so ausgebildet, dass sie eine vom Steg 24 beabstandet, angeordnete Öffnung 280 aufweist.

Die Öffnung 280 der Basis 28 ist in diesem Ausführungsbeispiel durch ein Verschlusselement 9 abgedeckt.

Die erste Befestigungsvorrichtung 20 des Befestigungssystems 2 ist weiterhin so ausgebildet, dass sie wenigstens ein, über eine Aufnahmenut 22 von der Basis 28 beabstandet angeordnetes, Auflageelement 21 aufweist.

Das Auflageelement 21 der ersten Befestigungsvorrichtung 20 ist in etwa orthogonal zur Basis 28 angeordnet.

Die erste Befestigungsvorrichtung 20 ist so ausgebildet und dimensioniert, dass sie eine Durchschlagsspannung von wenigstens 30 kV sowie eine Durchschlagsfestigkeit von wenigstens 10 kV / mm nach IEC 60243 aufweist.

Das Material der ersten Befestigungsvorrichtung 20 weist in diesem Ausführungsbeispiel einen spezifischen Durchgangswiderstand von etwa 10¹² Ohm x cm gemäß IEC 60093 sowie einen spezifischen Oberflächenwiderstand von etwa 10¹² Ohm gemäß IEC 60093 auf.

Die Aufnahmenut 22 der ersten Befestigungsvorrichtung 20 weist in diesem Ausführungsbeispiel eine Tiefe von etwa 5 bis 20 mm, bevorzugt 5 bis 15 mm auf.

Weiterhin ist die Aufnahmenut 22 der ersten Befestigungsvorrichtung 20 so ausgebildet, dass sie eine Breite von etwa 4 bis 20 mm, bevorzugt 4 bis 15 mm aufweist.

Das Abdeckelement 25, 26 der ersten Befestigungsvorrichtung weist in diesem Ausführungsbeispiel eine Breite von etwa 40 bis 80 mm, bevorzugt 50 bis 65 mm auf.

Weiterhin ist das Abdeckelement 25, 26 der ersten Befestigungsvorrichtung 20 so ausgebildet, dass dieses eine Höhe von 90 bis 200 mm, bevorzugt 100 bis 160 mm aufweist.

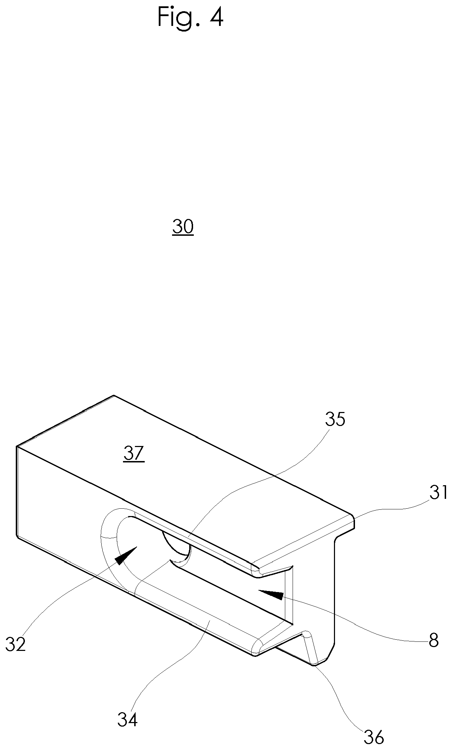

In der Fig. 4 ist eine perspektivische Darstellung der zweiten Befestigungsvorrichtung 30 des Befestigungssystems 2 des erfindungsgemäßen Stromschienensystems dargestellt.

Die zweite Befestigungsvorrichtung 30 weist einen Aufnahmeraum 8 auf, der an wenigstens einer Längsseite von wenigstens einem Führungssteg 34,35 begrenzt ist.

Der Aufnahmeraum 8 der zweiten Befestigungsvorrichtung 30 weist wenigstens eine Aufnahmeöffnung 32 auf.

In diesem Ausführungsbeispiel ist der erste Führungssteg 34 in etwa parallel zu einem zweiten Führungssteg 35 angeordnet.

Der Führungssteg 34, 35 ist so ausgebildet, dass er den Aufnahmeraum 8 der zweiten Befestigungsvorrichtung 30 zumindest teilweise umschließt.

Die Länge des Führungssteges 34,35 der zweiten Befestigungsvorrichtung 30 entspricht in etwa der Länge des Führungselementes 23,29 der hier nicht dargestellten ersten Befestigungsvorrichtung 20.

Die Aufnahmeöffnung 32 des Aufnahmeraumes 8 ist etwa kreisförmig ausgebildet. Es liegt jedoch auch im Rahmen der Erfindung, dass die Aufnahmeöffnung 32 des Aufnahmeraumes 8 im Querschnitt etwa kegelstumpfförmig ausgebildet ist. Die Aufnahmeöffnung 32 des Aufnahmeraumes 8 ist weiterhin als sogenannter Zentrierkonus ausgebildet.

Die zweite Befestigungsvorrichtung 30 weist wenigstens einen von ihrer Oberseite 37 wegragenden Steg 31 auf. Der Steg 31 ist dabei so ausgebildet, dass er bei bestimmungsgemäßer Verwendung im erfindungsgemäßen Stromschienensystem, die nicht dargestellte Stromschiene wenigstens teilweise überdeckt.

Die zweite Befestigungsvorrichtung 30 weist an ihrer der Oberseite 37 gegenüberliegenden freien Ende wenigstens ein Klemmelement 36 auf.

Die zweite Befestigungsvorrichtung 30 ist so ausgebildet und dimensioniert, dass sie eine Durchschlagsspannung von wenigstens 30 kV sowie eine Durchschlagsfestigkeit von wenigstens 10 kV / mm nach IEC 60243 aufweist.

Das Material der zweiten Befestigungsvorrichtung 30 weist in diesem Ausführungsbeispiel einen spezifischen Durchgangswiderstand von etwa 10¹² Ohm x cm gemäß IEC 60093 sowie einen spezifischen Oberflächenwiderstand von etwa 10¹² Ohm gemäß IEC 60093 auf.

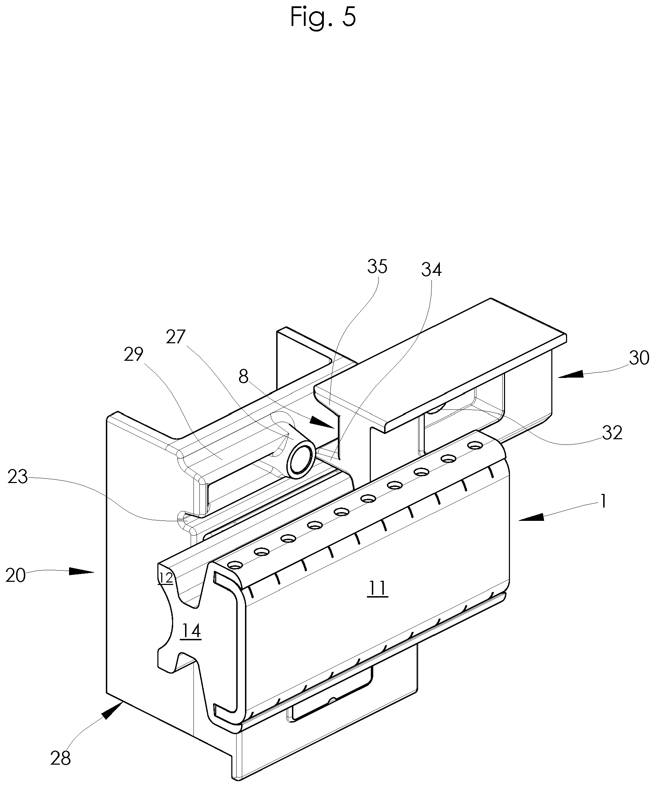

In der Fig. 5 ist eine weitere perspektivische Darstellung eines erfindungsgemäßen Stromschienensystems dargestellt.

Das Stromschienensystem umfasst wenigstens eine Stromschiene 1, wenigstens ein Befestigungssystem 2 mit einer ersten Befestigungsvorrichtung 20 sowie einer zweiten Befestigungsvorrichtung 30.

Die Stromschiene 1 ist so ausgebildet, dass sie ein Basisprofil 10 aufweist, welches einen Profilfuß 1, sowie einen Profilkopf 13 aufweist, die über den Profilsteg 14 miteinander verbunden sind. Im Profilkopf 13 ist ein Gleitflächenprofil 11 angeordnet.

Die erste Befestigungsvorrichtung 20 weist eine Basis 28 mit zwei daran, einander gegenüberliegend, an geordneten Abdeckelementen 25, 26 auf.

Diese sind geeignet, eine nicht dargestellte Trägervorrichtung zumindest teilweise abdeckend zu umgreifen.

Die erste Befestigungsvorrichtung 20 weist wenigstens ein, von der Basis 28 wegragendes Positionierelement 27 auf. Am Positionierelement 27 ist wenigstens ein Führungselement 23,29 angeordnet.

Die erste Befestigungsvorrichtung 20 weist einen, als Steg ausgebildetes, erstes Führungselement 29 sowie ein, als Nut ausgebildetes zweites Führungselement 23 auf.

Bei bestimmungsgemäßer Montage des erfindungsgemäßen Stromschienensystems wird die erste Befestigungsvorrichtung 20 über nichtdargestellte Fixierelemente an der nicht dargestellten Trägervorrichtung fixiert.

Die zweite Befestigungsvorrichtung 30 weist einen Aufnahmeraum 8 auf, der an wenigstens einer Längsseite von wenigstens einem Führungssteg 34,35 begrenzt ist.

Der Aufnahmeraum 8 weist wenigstens eine Aufnahmeöffnung 32 auf.

In einem ersten Montageschritt wird nun die Stromschiene 1 so an der ersten Befestigungsvorrichtung 20 angeordnet, dass der Profilfuß 12 in der Aufnahmenut 22 positioniert ist. Durch wenigstens ein Distanzelement 7 ist die Stromschiene 1 von der Aufnahmenut 22 beabstandet positioniert.

Zur endgültigen Fixierung der Stromschiene 1 des erfindungsgemäßen Stromschienensystems ist es nun erforderlich, dass die zweite Befestigungsvorrichtung 30, die Stromschiene 1 zumindest teilweise umgreift und diese über die erste Befestigungsvorrichtung 20 mit der nicht dargestellten Trägervorrichtung 4 zu fixieren ist.

Aufgrund der Geometrie insbesondere des Profilkopfes 13 der Stromschiene 1 ist jedoch die zweite Befestigungsvorrichtung 30 nicht direkt von vorn an der ersten Befestigungsvorrichtung 20 anbringbar bzw. fixierbar.

Beim erfindungsgemäßen Stromschienensystem ist es nun erstmals möglich, dass die zweite Befestigungsvorrichtung 30 seitlich neben der ersten Befestigungsvorrichtung 20 positionierbar und durch Verschieben in Längsrichtung der Stromschiene 1 soweit bewegbar ist, dass der erste Führungssteg 34 der zweiten Befestigungsvorrichtung 30 in dem zweiten Führungselement 23 der ersten Befestigungsvorrichtung 20 angeordnet und das der zweite Führungssteg 35 der zweiten Befestigungsvorrichtung 30 auf dem ersten Führungselement 29 der ersten Befestigungsvorrichtung 20 angeordnet ist.

Nun wird die zweite Befestigungsvorrichtung 30 weiter in Längsrichtung der Stromschiene 1 verschoben bis die freien Enden der Führungsstege 34,35 der zweiten Befestigungsvorrichtung 30 mit den freien Enden der Führungselemente 23, 29 der ersten Befestigungsvorrichtung 20 einander abschließend, in Wirkverbindung stehen.

In dieser Position ist das Befestigungssystem 2 des erfindungsgemäßen Stromschienensystems so ausgebildet, dass die erste Befestigungsvorrichtung 20 mit ihrem Positionierelement 27 in Wirkverbindung mit der Aufnahmeöffnung 32 der zweiten Befestigungsvorrichtung 30 steht.

Dabei ist das erfindungsgemäße Stromschienensystem weiterhin so ausgebildet, dass die Höhe des von der Basis 28 der ersten Befestigungsvorrichtung 20 wegragenden Positionierelementes 27 kleiner ist, als die Tiefe der Aufnahmeöffnung 32 der zweiten Befestigungsvorrichtung 30.

In der montierten Endposition stehen somit die Führungssteg 34,35 der zweiten Befestigungsvorrichtung 30 mit den Führungselementen 23,29 der ersten Befestigungsvorrichtung 20 in Wirkverbindung.

## Patentansprüche

1. Stromschienensystem umfassend wenigstens eine Stromschiene (1), wenigstens ein Befestigungssystem (2) mit einer ersten Befestigungsvorrichtung (20) sowie einer zweiten Befestigungsvorrichtung (30), wenigstens einer Trägervorrichtung (4), wobei das Befestigungssystem (2) an der Trägervorrichtung (4), wenigstens eine Stromschiene (1) aufnehmend, fixierbar ist, wobei die erste und zweite Befestigungsvorrichtung
(20,30) des Befestigungssystems (2) aus einem isolierendem Material hergestellt ist, wobei die erste Befestigungsvorrichtung (20) eine Basis (28) mit zwei daran, einander gegenüberliegend, angeordneten Abdeckelementen (25, 26) aufweist, die die Trägervorrichtung (4) zumindest teilweise abdeckend umgreifen, wobei die erste Befestigungsvorrichtung (20) wenigstens ein, von der Basis (28) wegragendes Positionierelement (27) aufweist, wobei die zweite Befestigungsvorrichtung (30) wenigstens einen Aufnahmeraum (8) aufweist, der an wenigstens einer Längsseite von wenigstens einem Führungssteg (34,35) begrenzt ist, wobei der Aufnahmeraum (8) wenigstens eine Aufnahmeöffnung (32) aufweist, **dadurch gekennzeichnet, dass** die erste Befestigungsvorrichtung wenigstens ein, als Steg ausgebildetes, erstes Führungselement (29) und/oder ein, als Nut ausgebildetes, zweites Führungselement(23) aufweist; und dass das erste und/oder zweite Führungselement (23, 29) etwa horizontal an wenigstens einer Seite des Positionierelementes (27) der ersten Befestigungsvorrichtung angeordnet ist.

2. Stromschienensystem nach Anspruch 1, **dadurch gekennzeichnet, dass** in der montierter
Endposition die Führungsstege (34,35) der zweiten Befestigungsvorrichtung (30) mit den Führungselementen (23,29) der ersten Befestigungsvorrichtung (20) in Wirkverbindung stehen.

3. Stromschienensystem nach einem der vorhergehenden Ansprüche, **dadurch gekennzeichnet, dass** die Höhe des von der Basis (28) der ersten Befestigungsvorrichtung (20) wegragenden Positionierelementes (27) kleiner ist als die Tiefe der Aufnahmeöffnung (32) der zweiten Befestigungsvorrichtung (30).

4. Stromschienensystem nach einem der vorhergehenden Ansprüche, **dadurch gekennzeichnet, dass** die freien Enden der Führungsstege (34,35) der zweiter Befestigungsvorrichtung (30) mit den freien Enden der Führungselemente (23, 29) der ersten Befestigungsvorrichtung (20) einander abschließend, in Wirkverbindung stehen.

5. Stromschienensystem nach einem der vorhergehenden Ansprüche, **dadurch gekennzeichnet, dass** ein erster Führungssteg (34) in etwa parallel zu einem zweiten Führungssteg (35) der zweiten Befestigungsvorrichtung (30) angeordnet ist.

6. Stromschienensystem nach einem der vorhergehenden Ansprüche, **dadurch gekennzeichnet, dass** der Führungssteg (34,35) den Aufnahmeraum (8) der zweiten Befestigungsvorrichtung (30) zumindest teilweise umschließt.

7. Stromschienensystem nach einem der vorhergehenden Ansprüche, **dadurch gekennzeichnet, dass** das erste Führungselement (29) in etwa parallel zum zweiten Führungselement (23) der ersten Befestigungsvorrichtung (20) angeordnet ist.

8. Stromschienensystem nach einem der vorhergehenden Ansprüche, **dadurch gekennzeichnet, dass** das Befestigungssystem (2) so ausgebildet ist, dass das Positionierelement (27) der ersten Befestigungsvorrichtung (20) im montierten Zustand von einem Sicherungselement (61) der zweiten Befestigungsvorrichtung (30) beabstandet angeordnet ist.

9. Stromschienensystem nach einem der vorhergehenden Ansprüche, **dadurch gekennzeichnet, dass** die Länge des Führungselementes (23,29) der ersten Befestigungsvorrichtung (20) in etwa der Länge des Führungssteges (34,35) der zweiten Befestigungsvorrichtung (30) entspricht.

10. Stromschienensystem nach einem der vorhergehenden Ansprüche, **dadurch gekennzeichnet, dass** die Tiefe des, als Nut ausgebildeten, zweiten Führungselementes (23) der ersten Befestigungsvorrichtung (20) in etwa gleich ist, zur Höhe des ersten Führungssteges (34) der zweiten Befestigungsvorrichtung (30).

11. Stromschienensystem nach einem der vorhergehenden Ansprüche, **dadurch gekennzeichnet, dass** die Höhe, des von der Basis (28) wegragenden, Positionierelementes (27) größer ist, als die Höhe des Führungselementes (23,29) der ersten Befestigungsvorrichtung (20).

## Claims

1. Busbar system comprising at least one busbar (1), at least one fastening system (2) having a first fastening device (20) and a second fastening device (30), at least one carrier device (4), wherein the fastening system (2) is fixable to the carrier device (4), receiving at least one busbar (1), wherein the first and second fastening devices (20, 30) of the fastening system (2) are made of an insulating material, wherein the first fastening device (20) has a base (28) with two mutually opposite cover elements (25, 26) arranged thereon which at least partially enclose the carrier device (4) in a covering manner, wherein the first fastening device (20) has at least one positioning element (27) projecting from the base (28), wherein the second fastening device (30) has at least one receiving space (8) which is bounded on at least one longitudinal side by at least one guide web (34, 35), wherein the receiving space (8) has at least one receiving opening (32), **characterised in that** the first fastening device has at least one first guide element (29) in the form of a web and/or a second guide element (23) in the form of a groove; and **in that** the first and/or second guide element (23, 29) is arranged approximately horizontally on at least one side of the positioning element (27) of the first fastening device.

2. Busbar system according to claim 1, **characterised in that**, in the mounted end position, the guide webs (34, 35) of the second fastening device (30) are in operative connection with the guide elements (23, 29) of the first fastening device (20).

3. Busbar system according to any one of the preceding claims, **characterised in that** the height of the positioning element (27) projecting from the base (28) of the first fastening device (20) is less than the depth of the receiving opening (32) of the second fastening device (30).

4. Busbar system according to any one of the preceding claims, **characterised in that** the free ends of the guide webs (34, 35) of the second fastening device (30) are in operative connection, with mutual closure, with the free ends of the guide elements (23, 29) of the first fastening device (20).

5. Busbar system according to any one of the preceding claims, **characterised in that** a first guide web (34) is arranged approximately parallel to a second guide web (35) of the second fastening device (30).

6. Busbar system according to any one of the preceding claims, **characterised in that** the guide web (34, 35) at least partially surrounds the receiving space (8) of the second fastening device (30).

7. Busbar system according to any one of the preceding claims, **characterised in that** the first guide element (29) is arranged approximately parallel to the second guide element (23) of the first fastening device (20).

8. Busbar system according to any one of the preceding claims, **characterised in that** the fastening system (2) is designed such that, in the mounted state, the positioning element (27) of the first fastening device (20) is arranged spaced apart from a securing element (61) of the second fastening device (30).

9. Busbar system according to any one of the preceding claims, **characterised in that** the length of the guide element (23, 29) of the first fastening device (20) corresponds approximately to the length of the guide web (34, 35) of the second fastening device (30).

10. Busbar system according to any one of the preceding claims, **characterised in that** the depth of the second guide element (23), which is in the form of a groove, of the first fastening device (20) is approximately the same as the height of the first guide web (34) of the second fastening device (30).

11. Busbar system according to any one of the preceding claims, **characterised in that** the height of the positioning element (27) projecting from the base (28) is greater than the height of the guide element (23, 29) of the first fastening device (20).

## Revendications

1. Système de rail conducteur comprenant au moins un rail conducteur (1), au moins un système de fixation (2) doté d'un premier dispositif de fixation (20) ainsi que d'un second dispositif de fixation (30), au moins un dispositif porteur (4), le système de fixation (2) pouvant être fixé sur le dispositif porteur (4), en recevant au moins un rail conducteur (1), le premier et le second dispositif de fixation (20, 30) du système de fixation (2) étant fabriqués en un matériau isolant, le premier dispositif de fixation (20) présentant une base (28) avec deux éléments de recouvrement (25, 26) opposés l'un à l'autre disposés sur celle-ci, lesquels enserrent au moins en partie en le recouvrant le dispositif porteur (4), le premier dispositif de fixation (20) présentant au moins un élément de positionnement (27) faisant saillie depuis la base (28), le second dispositif de fixation (30) présentant au moins un espace de réception (8), qui est limité sur au moins un côté longitudinal par au moins un relief de guidage (34, 35), l'espace de réception (8) présentant au moins une ouverture de réception (32), **caractérisé en ce que** le premier dispositif de fixation présente au moins un premier élément de guidage (29), réalisé sous la forme d'un relief, et/ou un second élément de guidage (23), réalisé sous la forme d'une rainure ; et **en ce que** le premier et/ou second élément de guidage (23, 29) est disposé approximativement horizontalement sur au moins un côté de l'élément de positionnement (27) du premier dispositif de fixation.

2. Système de rail conducteur selon la revendication 1, **caractérisé en ce que**, dans la position finale montée, les reliefs de guidage (34, 35) du second dispositif de fixation (30) sont en liaison fonctionnelle avec les éléments de guidage (23, 29) du premier dispositif de fixation (20).

3. Système de rail conducteur selon l'une des revendications précédentes, **caractérisé en ce que** la hauteur de l'élément de positionnement (27) faisant saillie depuis la base (28) du premier dispositif de fixation (20) est inférieure à la profondeur de l'ouverture de réception (32) du second dispositif de fixation (30).

4. Système de rail conducteur selon l'une des revendications précédentes, **caractérisé en ce que** les extrémités libres des reliefs de guidage (34, 35) du second dispositif de fixation (30) sont en liaison fonctionnelle, en se fermant mutuellement, avec les extrémités libres des éléments de guidage (23, 29) du premier dispositif de fixation (20).

5. Système de rail conducteur selon l'une des revendications précédentes, **caractérisé en ce qu'**un premier relief de guidage (34) est disposé approximativement parallèlement à un second relief de guidage (35) du second dispositif de fixation (30).

6. Système de rail conducteur selon l'une des revendications précédentes, **caractérisé en ce que** le relief de guidage (34, 35) entoure au moins partiellement l'espace de réception (8) du second dispositif de fixation (30).

7. Système de rail conducteur selon l'une des revendications précédentes, **caractérisé en ce que** le premier élément de guidage (29) est disposé approximativement parallèlement au second élément de guidage (23) du premier dispositif de fixation (20).

8. Système de rail conducteur selon l'une des revendications précédentes, **caractérisé en ce que** le système de fixation (2) est réalisé de telle sorte que, dans l'état monté, l'élément de positionnement (27) du premier dispositif de fixation (20) est disposé espacé d'un élément de blocage (61) du second dispositif de fixation (30).

9. Système de rail conducteur selon l'une des revendications précédentes, **caractérisé en ce que** la longueur de l'élément de guidage (23, 29) du premier dispositif de fixation (20) correspond approximativement à la longueur du relief de guidage (34, 35) du second dispositif de fixation (30).

10. Système de rail conducteur selon l'une des revendications précédentes, **caractérisé en ce que** la profondeur du second élément de guidage (23), réalisé sous la forme d'une rainure, du premier dispositif de fixation (20) est approximativement identique à la hauteur du premier relief de guidage (34) du second dispositif de fixation (30).

11. Système de rail conducteur selon l'une des revendications précédentes, **caractérisé en ce que** la hauteur de l'élément de positionnement (27) faisant saillie depuis la base (28) est supérieure à la hauteur de l'élément de guidage (23, 29) du premier dispositif de fixation (20).
